# EUROPÄISCHE PATENTANMELDUNG

(11) **EP 3 549 754 A1**
(43) Veröffentlichungstag der Anmeldung: **09.10.2019**
(21) Anmeldenummer: 19155190.2
(22) Anmeldetag: 04.02.2019
(51) Int. Cl.: B29D 30/00

(54) **VERFAHREN ZUR HERSTELLUNG EINES FAHRZEUGREIFENS**

(30) Priorität: 05.04.2018 DE 102018205123
(71) Anmelder: Continental Reifen Deutschland GmbH, 30165 Hannover (DE)
(72) Erfinder: Scher, Andreas, 31303 Burgdorf (DE); Gerlach, Markus, 31073 Grünenplan (DE)
(74) Vertreter: Widjaja, Wira

(57) **Zusammenfassung**

Um ein Fahrzeugreifen bereitzustellen, bei dem das Anordnen einer Haltevorrichtung für das Reifenmodul verbessert wird, wird ein Verfahren mit den folgenden Schritten vorgeschlagen:
a) Herstellen einer Reifenrohlings (1) mit Reifenbaumaschinen,
wobei der Reifenrohling (1) eine Vielzahl von Reifenbauteilen und zumindestens eine Reifeninnenseite (3) umfasst,
b) Bereitstellen eines Gummicontainers (2) für die Aufnahme eines Reifenmoduls,
c) Anordnen des Gummicontainers (2) an einer vorgegebenen Position (6) auf der Reifeninnenseite (2),
d) Einführen eines Platzhalters (9) in den Gummicontainer (1),
e) Vulkanisation des Reifenrohlings (2) mit einer Vulkanisationsvorrichtung,
wobei ein Vulkanisationsbalg (7) auf der Reifeninnenseite (3) anliegt und den Gummicontainer (2) fest gegen die Reifeninnseite (3) drückt,
wobei die Unterseite des Gummicontainers (2) fest mit einem Teilbereich der Reifeninnenseite (3) verbunden wird,
f) Entnahme des fertig vulkanisierten Fahrzeugreifens mit dem angebundenen Gummicontainer (2) aus der Vulkanisationsvorrichtung,
g) Entnahme des Platzhalters (9) aus dem Gummicontainer (2).

## Beschreibung

Die Erfindung betrifft ein Verfahren zur Herstellung eines Fahrzeugreifens.

Reifenmodule werden im Reifen für verschiedene Aufgaben eingesetzt. Hierzu zählen insbesondere eine Luftdrucküberwachung, eine Temperaturmessung oder die Messung von mechanischen Spannungszuständen im Reifen. Moderne Reifenmodule umfassen ein Elektronikmodul, in dem Sensorelemente und andere elektronische Bauteile angeordnet sind. Ein Beispiel für ein solches Reifenmodul offenbart die DE 102 43 441 A1.

Der Erfindung liegt die Aufgabe zugrunde, einen Fahrzeugreifen bereitzustellen, bei dem das Anbringen einer Haltevorrichtung für das Reifenmodul verbessert wird.

Gelöst wird die Aufgabe mit einem Verfahren nach Anspruch 1 mit den folgenden Schritten:
a) Herstellen einer Reifenrohlings mit Reifenbaumaschinen,
   wobei der Reifenrohling eine Vielzahl von Reifenbauteilen und zumindestens eine Reifeninnenseite umfasst,
b) Bereitstellen eines Gummicontainers für die Aufnahme eines Reifenmoduls,
c) Anordnen des Gummicontainers an einer vorgegebenen Position auf der Reifeninnenseite,
d) Einführen eines Platzhalters in den Gummicontainer,
e) Vulkanisation des Reifenrohlings mit einer Vulkanisationsvorrichtung,
   wobei ein Vulkanisationsbalg auf der Reifeninnenseite anliegt und den Gummicontainer fest gegen die Reifeninnseite drückt,
   wobei die Unterseite des Gummicontainers fest mit einem Teilbereich der Reifeninnenseite verbunden wird,
f) Entnahme des fertig vulkanisierten Fahrzeugreifens mit dem angebundenen Gummicontainer aus der Vulkanisationsvorrichtung,
g) Entnahme des Platzhalters aus dem Gummicontainer.

Ein Vorteil der Erfindung ist insbesondere darin zu sehen, dass das Anbringe des Gummicontainers im Fahrzeugreifen vereinfacht und verbessert wird.

Der Gummicontainer wird mit dem neuen Herstellungsverfahren für Fahrzeugreifen hochfest mit der Reifeninnenseite verbunden. Auf diese Weise wird vermieden, dass sich der Gummicontainer mit einem eingesetzten Reifenmodul unbeabsichtigt von der Reifeninnenseite lösen kann. Der Gummicontainer wird an seiner Unterseite mit einem Vulkanisationsvorgang fest mit der Reifeninnenseite stoffschlüssig verbunden. Ein weiterer wesentlicher Vorteil besteht darin, dass der Gummicontainer nicht mehr nachträglich nach der Fertigstellung des Reifens auf der Reifeninnenseite montiert werden muss. Das Einbinden des Gummicontainers auf die Reifeninnenseite des Fahrzeugreifens ist direkt in den Herstellungsprozess für den Reifen integriert.

Die Verwendung eines Platzhalters hat den Vorteil, dass der Gummicontainer bei der Vulkanisation des Reifens im Wesentlichen seine Form beibehält und nicht beschädigt wird. Außerdem wird dadurch das nachträgliche Einsitzen eines Reifenmoduls wesentlich vereinfacht.

In einer vorteilhaften Weiterbildung der Erfindung ist vorgesehen, dass bei Schritt d) der Platzhalter in Form von flüssigen Silikon in eine obere Öffnung des Gummicontainers eingeführt wird,
wobei das Silikon nach einiger Zeit aushärtet und nachfolgend einen festen Platzhalter bildet.

Auf diese Weise wird das Einbringen eines Platzhalters wesentlich vereinfacht. Der Gummicontainer hat auf seiner Oberseite eine Öffnung, in die das flüssige Silikon eingefüllt werden kann. Auf diese Weise ist es nicht notwendig, die beiden seitlichen Gummilippen an der Öffnung auseinanderzuziehen. Nach einer vorgegebenen Zeit härtet das flüssige Silikon aus und bildet einen festen Platzhalter.

In einer weiteren vorteilhaften Weiterbildung der Erfindung ist vorgesehen, dass bei Schritt d) der Hohlraum des Gummicontainers mit einem Füllgrad von maximal 50 %, vorzugsweise 10 bis 40 %, mit flüssigen Silikon befüllt wird.

Auf diese Weise wird vermieden, dass der Platzhalter beim Andrücken des Vulkanisationsbalges einen zu großen Druck auf die Reifeninnenseite ausübt. Ein zu großer Anpressdruck könnte die Reifenbauteile unterhalb des Gummicontainers ggfs. beeinträchtigen.

In einer weiteren vorteilhaften Weiterbildung der Erfindung ist vorgesehen, dass der Platzhalter aus ausgehärteten Silikon nach Schritt d) eine Temperaturbeständigkeit von mindestens 100 ° Celsius aufweist.

Dadurch wird sichergestellt, dass der Platzhalter den hohen Vulkanisationstemperaturen standhält.

In einer weiteren vorteilhaften Weiterbildung der Erfindung ist vorgesehen, dass der Platzhalter aus ausgehärteten Silikon nach Schritt d) eine Materialhärte von 25 bis 60 Shore A aufweist.

Bei dieser Materialhärte kann vom Platzhalter eine ausreichende Druckkraft weitergegeben werden, um die Unterseite des Gummicontainers mit der Reifeninnenseite fest zu verbinden.

In einer weiteren vorteilhaften Weiterbildung der Erfindung ist vorgesehen, dass bei Schritt c) der Gummicontainer auf seiner Unterseite mit einem fluiden Haftvermittler auf der Reifeninnenseite fixiert wird.

Ein entsprechender Haftvermittler kann beispielsweise Waschbenzin und Bestandteile einer Gummilösung umfassen. Der Haftvermittler verbessert wesentlich die Verbindung des Gummicontainers mit der Reifeninnenseite.

In einer weiteren vorteilhaften Weiterbildung der Erfindung ist vorgesehen, dass bei Schritt b) der Gummicontainer aus bereits vulkanisierten Gummimaterial besteht.

Dadurch behält der Gummicontainer bei der Vulkanisation im Wesentlichen seine Form bei.

In einer weiteren vorteilhaften Weiterbildung der Erfindung ist vorgesehen, dass der Gummicontainer auf seiner Unterseite eine kreisringförmige Krempe mit einen Außendurchmesser von 30 bis 70 mm aufweist.

Die kreisringförmige Krempe verbessert wesentlich die Anbringung des Gummicontainers an der Reifeninnenseite.

In einer weiteren vorteilhaften Weiterbildung der Erfindung ist vorgesehen, dass der Gummicontainer eine Höhenabmessung von 10 bis 40 mm aufweist.

Dadurch kann der Gummicontainer einen ausreichenden Platz zur Verfügung stellen, um im Hohlraum ein Reifenmodul zu platzieren.

Anhand mehrerer Ausführungsbeispiele soll die Erfindung näher erläutert werden. Es zeigen:
- Fig. 1:: ein erstes Ausführungsbeispiel,
- Fig. 2:: einen Verfahrensschritt, bei dem der Gummicontainer an die Reifeninnenseite gedrückt wird,
- Fig. 3:: einen Verfahrensschritt, bei dem der Platzhalter entfernt wird,
- Fig. 4:: einen Gummicontainer in einer Querschnittsansicht

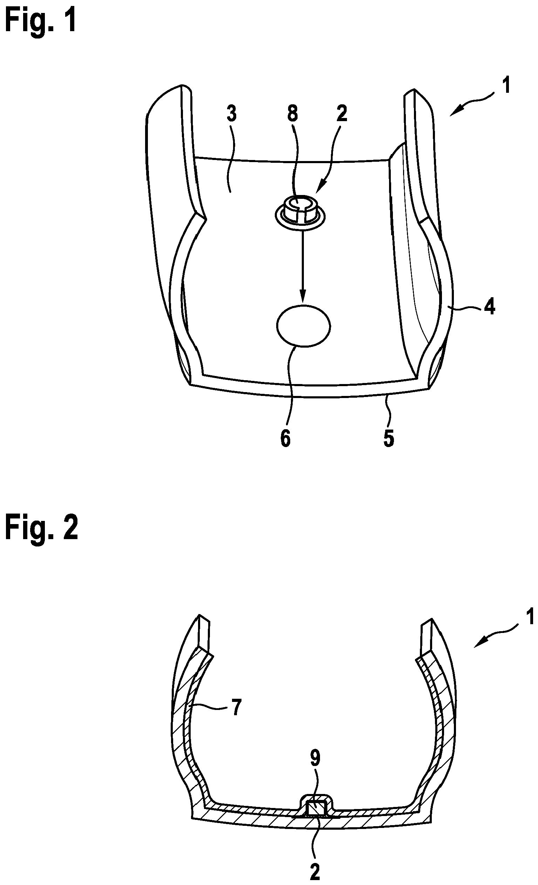

Die Figur 1 zeigt ein Ausführungsbeispiel. Der Gummicontainer 2 besitzt an seiner Oberseite eine ringförmige Öffnung 8. Er wird an der Position 6 auf der Reifeninnenseite platziert, wobei diese Position gegenüberliegend vom Laufstreifen 5 liegt. Der Reifenrohling 1 umfasst eine Vielzahl von Reifenbauteilen, wie beispielsweise die Seitenwand 4, die Reifeninnenseite 3 und den Laufstreifen 5.

Der Reifenrohling 1 wurde mit einem konventionellen Herstellungsverfahren mit Reifenbaumaschinen hergestellt. Die Unterseite des Gummicontainers 2 wird mit einem Haftvermitttler versehen, der die Anbindung an die Reifeninnenseite wesentlich verbessert. Anschließend wird der Reifenrohling 1 mit dem Gummicontainer 2 in einer nicht dargestellten Vulkanisationsvorrichtung angeordnet.

Die Figur 2 zeigt den Verfahrensschritt, bei dem der Reifenrohling 1 in einer Vulkanisationsvorrichtung angeordnet ist. Der Vulkanisationsbalg 7 liegt auf der Reifeninnenseite des Reifenrohlings 1 an und drückt den Gummicontainer 2 mit einem im Hohlraum angeordneten Platzhalter 9 gegen die Reifeninnenseite. Auf diese Weise wird die Unterseite des Gummicontainers fest mit der Reifeninnenseite stoffschlüssig miteinander verbunden. Der Platzhalter 9 wird vor dem Anordnen des Reifenrohlings in die Vulkanisationsvorrichtung in den Gummicontainer 2 eingebracht. Der Platzhalter besteht vorzugsweise aus einem flüssigen Silikon, welches nach einer bestimmten Zeit aushärtet. Das flüssige Silikon wird in die Öffnung 8 auf der Oberseite des Gummicontainers eingefüllt. Nach der Reifenvulkanisation wird der Reifenrohling 1 mit dem angebundenen Gummicontainer aus der Vulkanisationsvorrichtung entnommen.

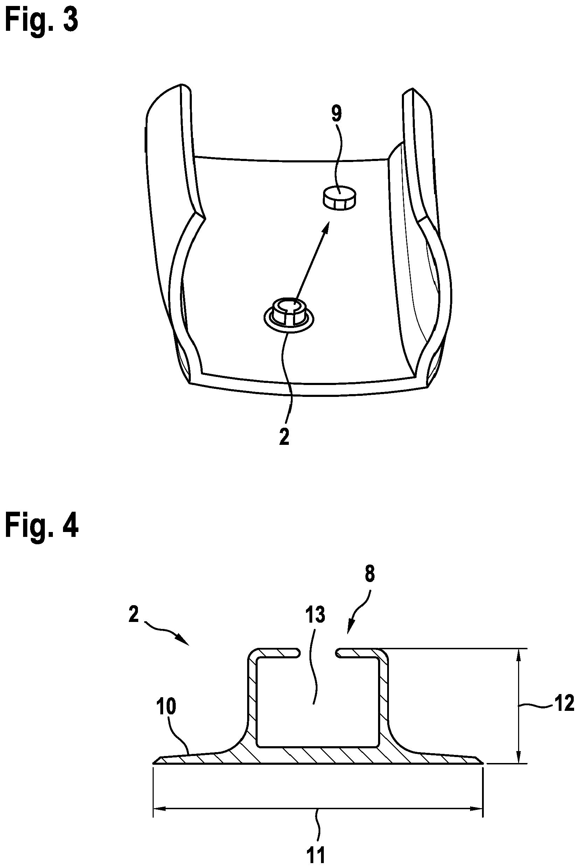

Die Figur 3 zeigt den Reifenrohling 1 mit dem fest verbundenen Gummicontainer 2 nach der Entnahme aus der Vulkanisationsvorrichtung. Der Platzhalter 9 wird beispielsweise manuell aus dem Hohlraum des Gummicontainers entfernt. Anschließend kann direkt ein Reifenmodul in den Hohlraum des Gummicontainers eingesetzt werden. Das Reifenmodul umfasst eine Vielzahl von elektronischen Bauteilen, die beispielsweise zur Messung des Reifendruckes eingesetzt werden.

Die Fig. 4 zeigt den Gummicontainer 2 in eine Querschnittsansicht. Der Gummicontainer 2 besitzt an seiner Unterseite eine kreisringförmige Krempe 10 mit einem Außendurchmesser 11 von bis zu 70 mm. Die Höhenabmessung des Gummicontainers 12 beträgt zwischen 10 und 40 mm. Der Gummicontainer besitzt einen Hohlraum 13 und auf der Oberseite eine Öffnung 8, durch die der Platzhalter eingesetzt und wieder entnommen werden kann. Der Hohlraum 13 des Gummicontainers 2 wird mit dem flüssigen Silikon mit maximal 50% befüllt.

### Bezugszeichenliste (ist Teil der Beschreibung)

- 1: Unvulkanisierter Reifenrohling
- 2: Gummicontainer
- 3: Reifeninnenseite
- 4: Seitenwand des Fahrzeugreifens
- 5: Laufstreifen
- 6: Position des Gummicontainers auf der Reifeninnenseite
- 7: Vulkanisationsbalg
- 8: Öffung im Gummicontainer
- 9: Platzhalter
- 10: Krempe des Gummicontainers
- 11: Durchmesser der Unterseite des Gummicontainers
- 12: Höhenabmessung des Gummicontainers
- 13: Hohlraum im Gummicontainer

## Patentansprüche

1. Verfahren zur Herstellung eines Fahrzeugreifens mit folgenden Schritten:
a) Herstellen einer Reifenrohlings (1) mit Reifenbaumaschinen,
wobei der Reifenrohling (1) eine Vielzahl von Reifenbauteilen und zumindestens eine Reifeninnenseite (3) umfasst,
b) Bereitstellen eines Gummicontainers (2) für die Aufnahme eines Reifenmoduls,
c) Anordnen des Gummicontainers (2) an einer vorgegebenen Position (6) auf der Reifeninnenseite (2),
d) Einführen eines Platzhalters (9) in den Gummicontainer (1),
e) Vulkanisation des Reifenrohlings (2) mit einer Vulkanisationsvorrichtung, wobei ein Vulkanisationsbalg (7) auf der Reifeninnenseite (3) anliegt und den Gummicontainer (2) fest gegen die Reifeninnseite (3) drückt,
wobei die Unterseite des Gummicontainers (2) fest mit einem Teilbereich der Reifeninnenseite (3) verbunden wird,
f) Entnahme des fertig vulkanisierten Fahrzeugreifens mit dem angebundenen Gummicontainer (2) aus der Vulkanisationsvorrichtung,
g) Entnahme des Platzhalters (9) aus dem Gummicontainer (2).

2. Verfahren nach Anspruch 1,
**dadurch gekennzeichnet, dass**
bei Schritt d) der Platzhalter (9) in Form von flüssigen Silikon in eine obere Öffnung (8) des Gummicontainers (2) eingeführt wird,
wobei das Silikon nach einiger Zeit aushärtet und nachfolgend einen festen Platzhalter (9) bildet.

3. Verfahren nach einem der vorhergehenden Ansprüche,
**dadurch gekennzeichnet, dass**
bei Schritt d) der Hohlraum (13) des Gummicontainers (2) mit einem Füllgrad von maximal 50 %, vorzugsweise 10 bis 40 %, mit flüssigen Silikon befüllt wird.

4. Verfahren nach einem der vorhergehenden Ansprüche,
**dadurch gekennzeichnet, dass**
der Platzhalter (9) aus ausgehärteten Silikon nach Schritt d) eine Temperaturbeständigkeit von mindestens 100 ° Celsius aufweist.

5. Verfahren nach einem der vorhergehenden Ansprüche,
**dadurch gekennzeichnet, dass**
der Platzhalter (9) aus ausgehärteten Silikon nach Schritt d) eine Materialhärte von 25 bis 60 Shore A aufweist.

6. Verfahren nach einem der vorhergehenden Ansprüche,
**dadurch gekennzeichnet, dass**
bei Schritt c) der Gummicontainer (2) auf seiner Unterseite mit einem fluiden Haftvermittler auf der Reifeninnenseite (3) fixiert wird.

7. Verfahren nach einem der vorhergehenden Ansprüche,
**dadurch gekennzeichnet, dass**
bei Schritt b) der Gummicontainer (2) aus bereits vulkanisierten Gummimaterial besteht.

8. Verfahren nach einem der vorhergehenden Ansprüche,
**dadurch gekennzeichnet, dass**
der Gummicontainer (2) auf seiner Unterseite eine kreisringförmige Krempe (10) mit einen Außendurchmesser (11) von 30 bis 70 mm aufweist.

9. Verfahren nach einem der vorhergehenden Ansprüche,
**dadurch gekennzeichnet, dass**
der Gummicontainer (2) eine Höhenabmessung von 10 bis 40 mm aufweist.
